**Europäisches Patentamt**

**European Patent Office**

**Office européen des brevets**

(19)

(11) Veröffentlichungsnummer: **0 141 014**
**B1**

(12) # EUROPÄISCHE PATENTSCHRIFT

(45) Veröffentlichungstag der Patentschrift:
**24.02.88**

(51) Int. Cl.⁴: **A 61 C 7/00**, A 61 C 19/04

(21) Anmeldenummer: **84106369.6**

(22) Anmeldetag: **04.06.84**

(54) Vorrichtung zur Bestimmung der Soll-Position der Zähne.

(30) Priorität: **11.08.83 DE 3329084**

(43) Veröffentlichungstag der Anmeldung:
**15.05.85 Patentblatt 85/20**

(45) Bekanntmachung des Hinweises auf die Patenterteilung:
**24.02.88 Patentblatt 88/8**

(84) Benannte Vertragsstaaten:
**AT BE CH DE FR GB IT LI LU NL SE**

(56) Entgegenhaltungen:
**DD-U-624**
**DE-A-2 935 391**
**DE-C-558 881**
**US-A-1 840 703**
**US-A-3 879 849**

(73) Patentinhaber: **Schrems, Hans Th., Dr. Dr.,**
**Dechbettener Strasse 1, D-8400 Regensburg 1 (DE)**
Patentinhaber: **Schrems- Adam, Gabriele, Dr.,**
**Dechbettener Strasse 1, D-8400 Regensburg 1 (DE)**

(72) Erfinder: **Schrems, Hans Th., Dr. Dr.,**
**Dechbettener Strasse 1, D-8400 Regensburg 1 (DE)**
Erfinder: **Schrems- Adam, Gabriele, Dr.,**
**Dechbettener Strasse 1, D-8400 Regensburg 1 (DE)**

(74) Vertreter: **Haft, Berngruber, Czybulka, Postfach 14
02 46, D-8000 München 5 (DE)**

EP 0 141 014 B1

## Beschreibung

Die Erfindung bezieht sich auf eine Vorrichtung zur Bestimmung der Soll-Position aller Unter- und Oberkieferzähne.

Um den jeweiligen Status bei der Zahnregulierung festzustellen, werden nach der US-A-3 879 849 mehrere Meßzirkel verwendet. Mit dem ersten Meßzirkel wird dabei der transversale Abstand z. B. zwischen den ersten Prämolaren, mit dem zweiten Meßzirkel der transversale Abstand zwischen den zweiten Molaren und mit dem dritten Meßzirkel der sagittale Abstand zwischen dem ersten Prämolaren und dem zweiten Molaren einer Seite des Unterkiefers eingestellt. Drei weitere Zirkel werden in entsprechender Weise für den Oberkiefer eingestellt.

Aus der DD-U 624 ist eine Schablone bekannt, die eine Zentimeterskala oder Linie für die Raphemedianebene, eine die Raphemedianlinie in einem Zentralpunkt senkrecht schneidende Zentimeterskala für die ersten Molaren, zwei vom Zentralpunkt schräg verlaufende Zentimeterskalen für die beiden Eckzähne und eine weitere die Raphemedianlinie senkrecht schneidende Zentimeterskala für die zweiten Molaren des Unter- oder Oberkiefers aufweist. Zur Messung wird die Schablone mit der Raphemedianlinie zwischen die beiden vorderen Schneidezähne und mit der Linie für die zweiten Molaren auf dieselben gelegt. Alsdann werden die Abstände der ersten und zweiten Molaren von der Raphemedianlinie und der der Eckzähne vom Zentralpunkt abgelesen.

Mit den Vorrichtungen nach der US-A-3 879 849 wie nach dem DD-U 624 läßt sich der Erfolg einer orthodontischen Behandlung kaum, jedenfalls nur unvollständig im Hinblick auf die Zahnstellungen verfolgen. So ist die mögliche Stellungsveränderung von Zähnen und ihren Wurzeln vor allem von der räumlichen Lage der Zähne im Knochen (Alveolarfortsatz) abhängig. Bei den bekannten Vorrichtungen besteht jedoch keinerlei räumlicher Bezug zur skelettalen Basis. Vielmehr sind, da nur der Abstand zwischen bestimmten Bezugszähnen erfaßt wird, bei der orthodontischen Behandlung laterale, sagittale und vertikale Verschiebungen der Bezugszähne zur skelettalen Basis möglich, ohne daß sie mit den bekannten Vorrichtungen festgestellt werden können. Weiterhin werden Bewegungen derjenigen Zahngruppen, die nicht als Bezugszähne dienen, überhaupt nicht erfaßt. Auch bleiben die Okklusionsverhältnisse bei den bekannten Vorrichtungen völlig unberücksichtigt.

Der Erfindung, wie sie in den Ansprüchen gekennzeichnet ist, liegt daher die Aufgabe zugrunde, eine Vorrichtung anzugeben, mit der die Soll-Position aller Unter- und Oberkieferzähne exakt bestimmt werden, d. h. angegeben werden kann, welche Zähne unter Berücksichtigung eines eventuell nochstattfindenden Wachstums in welchem Umfang und in welcher Richtung bewegt werden müssen, damit die ideale Schlußbißstellung erreicht wird, nämlich eine maximale Interkuspidation bei terminaler Scharnierachsenposition oder zentrale Okklusion bei zentraler Relation.

Durch die Schablonen des Satzes der erfindungsgemäßen Vorrichtung wird also im wesentlichen der gesamte bei Patienten vorkommende Kiefer- und Zahngrößenbereich abgedeckt.

Die Schablonen, aus denen die erfindungsgemäße Vorrichtung sich zusammensetzt, sind relativ einfach aufgebaut. Dabei liegen der erfindungsgemäßen Vorrichtung folgende Erkenntnisse zugrunde. Die Lage der terminalen Scharnierachsenposition wird im wesentlichen durch die Zahnbogenlänge, d. h. die Summe der mesiodistalen Durchmesser aller Zähne und durch die Zahnbogenform bestimmt. Die Lage der okkludierenden Teile der Zähne, also der Höckerspitzen, der Gruben und Fissuren sowie der Schneidekanten der Zähne, ist bei vorgegebener Zahnbogenlänge und Zahnbogenform nämlich fast immer die gleiche.

Weiterhin ist eine Zahnregulierung nur innerhalb der Toleranzen möglich, die die skelettale Basis vorgibt. Jede Zahnregulierung hat daher von den Zähnen mit den geringsten alveolären Toleranzen auszugehen.

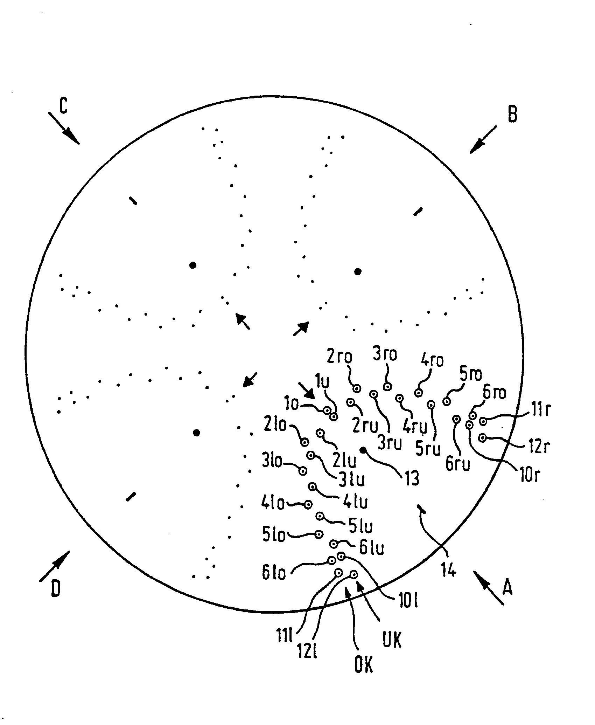

Eine Ausführungsform der erfindungsgemäßen Vorrichtung ist nachstehend anhand der Zeichnung näher erläutert, deren einzige Figur eine Ansicht einer Scheibe mit vier Schablonen A, B, C und D zeigt.

Mit vier solchen Schablonen für vier unterschiedliche Zahnbreitentypen für die drei wichtigsten Grundzahnbogenformen nach Ricketts ("Design of Arch Form and Details of Bracket Placement"; 1979, Seite 4, herausgegeben von Rocky Mountains/Orthodontics) werden praktisch alle Nichtextraktionsfälle abgedeckt.

Die Schablonen A, B, C und D unterscheiden sich nur dadurch, voneinander, daß sie jeweils für eine andere Zahnbogenlänge und Zahnbogenform bestimmt sind. Der Einfachheit halber wird daher nur auf die Schablone A näher eingegangen.

Die Markierungspunkte 1u, 2ru bis 6ru und 2lu bis 6lu des inneren Bogens UK der Schablone A geben dabei die Approximalpunkte zwischen den beiden mittleren Schneidezähnen sowie dem mittleren und dem seitlichen Schneidezahn, dem seitlichen Schneidezahn und dem Eckzahn, dem Eckzahn und dem ersten Prämolaren, dem ersten Prämolaren und dem zweiten Prämolaren und dem zweiten Prämolaren und dem ersten Molaren des Unterkiefers wieder, und zwar für die linke (l) und die rechte (r) Seite. Die Markierungspunkte 1o, 2ro bis 6ro und 2lo bis 6lo des äußeren Bogens OK geben die Approximalpunkte zwischen den entsprechenden Zähnen des Oberkiefers wieder. Die Wiedergabe der Markierungspunkte 1, 2ru bis 6ru und 2lu bis 6lu des inneren Bogens UK und die der

Markierungspunkte 1o, 2ro bis 6ro und 2lo bis 6lo des äußeren Bogens OK stellt dabei eine Projektion der Approximalpunkte in die Horizontalebene dar.

Die Markierungspunkte 10r und 11r sowie 10l und 11l entsprechen hingegen den beiden mesiobukkalen Höckerspitzen der 1. Molaren des Unter- bzw. Oberkiefers. D. h. die Approximalpunkte zwischen den 1. und den 2. Molaren sind auf dieser Schablone nicht markiert. Selbstverständlich können auch Markierungen für andere Approximalpunkte der Zähne fehlen. Bevorzugt ist jedoch die dargestellte Ausführungsform, bei der, abgesehen von den Approximalpunkten zwischen dem 1. und dem 2. Molaren, Markierungen für sämtliche Approximalpunkte der Zähne des Ober- und Unterkiefers vorgesehen sind.

Der endständige Punkt 12r bzw. 12l stellt den Zentralpunkt des 1. oberen Molaren dar. Der Zentralpunkt ist ein in der Kieferorthopädie und in der Anthropologie gebräuchlicher Bezugspunkt.

Er entspricht dem tiefsten Punkt der Zentralfissur und liegt im Schnittpunkt zwischen der Zentralfissur und der zwischen den beiden bukkalen Höckern verlaufenden transversalen Fissur.

Weiterhin weist die Schablone zwei Markierungen 13 und 14 auf, die die Raphemedianebene kennzeichnen.

Die Markierungspunkte 1u, 2ru bis 6ru, 2lu bis 6lu, 1o, 2ro bis 6ro, 2lo bis 6lo geben dabei die Approximalkontakte bei Idealbezahnung für die betreffenden Zahnbogenlänge und Zahnbogenform wieder. Gleiches gilt für die Markierungspunkte 10r, 11r, 10l und 11l für die Höckerspitzen der 1. Molaren sowie für die endständigen Punkte 12r und 12l auf der Schablone A.

Die Scheibe, auf der die Schablonen A, B, C und D angeordnet sind, besteht vorzugsweise aus einem durchsichtigen und flexiblen Kunststoff.

Bei der Anwendung der erfindungsgemäßen Vorrichtung kann beispielsweise folgendermaßen vorgegangen werden:

Mit Hilfe eines Wachsbisses (durchgebissenes Wachsregistrat) erfolgt in der Kieferorthopädie die Zuordnung von Oberkiefer- und Unterkiefermodell in der habituellen Interkuspidation. Da jedoch die Zuordnung von Oberkiefer- und Unterkiefermodell in der habituellen Interkuspidation bekanntlich nicht sicher reproduzierbar ist und in Abhängigkeit von vorliegenden Zahnfehlstellungen in fast allen Fällen über den Einfluß des neuromuskulären Systems zur räumlichen Verlagerung des Unterkiefers führt, ist grundsätzlich ein zentrisches Wachsregistrat, das eine reproduzierbare Zuordnung von Oberkiefer und Unterkiefer ohne die Gefahr der translatorischen Unterkieferverlagerung ermöglicht, erforderlich. Damit wird die Zuordnung von Oberkiefer- und Unterkiefermodell in terminaler Scharnierachsenposition möglich und ebenfalls eine Stellungsbeurteilung von Oberkiefer- und Unterkieferzähnen in terminaler Scharnierachsenposition.

Es wird die Zahnbogenlänge des Patienten bestimmt. Dabei kann z. B. nach der sogenannten SI-Methode vorgegangen werden, d. h. es wird die Summe der mesio-distalen Durchmesser der unteren vier Schneidezähne (Incisivi) bestimmt, woraus sich empirisch die Zahnbogenlänge ergibt.

Außerdem wird die Zahnbogenform des Patienten ermittelt. Die Zahnbogenform kann beispielsweise anhand der Gesichtsform oder anhand der Form der vorliegenden knöchernen Basis (Alveolarforsatz) bestimmt werden. Dabei ist die Einteilung in vier oder fünf unterschiedliche Grundzahnbogenformen je Zahnbogenlänge ausreichend. Z. B. werden mit fünf Grundzahnbogenformen praktisch 100 % der Fälle abgedeckt (Ricketts in "Design of Arch Form and Details of Bracket Placement", 1979, Seite 4, herausgegeben von Rocky Mountains/Orthodontics).

Anhand der gemessenen Zahnbogenlänge und der ermittelten Zahnbogenform wird nun die jeweilige Schablone A, B, C, D... ausgewählt. Bei Abweichungen und Diskrepanzen zwischen Vorder- und Seitenzähnen oder Ober- und Unterkieferzähnen (z. B. Bolton-Diskrepanz) wird ein anderer, diese Umstände berücksichtigender Schablonentyp verwendet.

Wie vorstehend erwähnt, ist bei der Zahnregulierung von den Zähnen mit den geringsten alveolären Toleranzen auszugehen. Am stärksten limitiert ist die Stellungsänderung in dem Alveolarforstatz dabei bei den Unterkieferschneidezähnen, besonders bei den Unterkieferschneidezähnen aufgrund der Symphysenkonfiguration. Zweckmäßigerweise stellt daher der Approximalpunkt zwischen den mittleren Schneidezähnen des Unterkiefers den Ausgangspunkt der Zahnregulierung mit der erfindungsgemäßen Vorrichtung dar.

Die Bewegungstoleranz der mittleren Schneidezähne des Unterkiefers im Alveolarforsatz läßt sich mit einer seitlichen Fernröntgenaufnahme und einer kieferorthopädischen Modellanalyse unter Berücksichtigung der individuellen Situation genau bestimmen.

Anhand des so ermittelten therapeutischen Bewegungsspielraums wird nun der Soll-Approximalpunkt zwischen den mittleren Schneidezähnen des Unterkiefers festgelegt und das Unterkiefermodell mit einem entsprechenden Markierungspunkt versehen. Selbstverständlich sind eventuell vorhandene alveoläre Mittellinienverschiebungen bei der Festlegung des therapeutischen Soll-Approximalpunktes zwischen den unteren Schneidezähnen ebenso zu berücksichtigen wie das gegebenenfalls noch einzukalkulierende Wachstum, wobei die Wachstumsrichtung anhand der gängigen und in der Orthodontie und Kieferorthopädie gebräuchlichen Wachstumsvorhersagemethoden aufgrund kephalometrischer und sonstiger Daten ermittelt wird.

Der Markierungspunkt auf dem Unterkiefermodell für den Soll-Approximalpunkt zwischen den mittleren Schneidezähnen und der Markierungspunkt 1u auf der betreffenden Schablone der erfindungsgemäßen Vorrichtung werden nun zur Deckung gebracht, und zwar bei übereinstimmenden Markierungen 13 und 14 der Schablone mit der Geraden, mit der die Raphemedianebene das Unterkiefermodell schneidet.

Die Gerade, mit der die Raphemedianebene das Unterkiefermodell schneidet, läßt sich beispielsweise dadurch ermitteln, daß in der Gaumennaht am Oberkiefermodell an zwei voneinander entfernten Punkten Bohrungen angebracht werden, in die Markierungsstifte eingesetzt werden. Das Ober- und Unterkiefermodell wird dann in terminaler Scharnierachsenposition vorzugsweise im Artikulator angeordnet, wobei die beiden Markierungsstife im Oberkiefermodell zwei entsprechende Markierungen auf dem Unterkiefermodell erzeugen, die dann die Raphemedianebene auf dem Unterkiefermodell wiedergeben.

Bei Deckungsgleichheit des Markierungspunktes 1u der Schablone für den Approximalpunkt zwischen den beiden mittleren Schneidezähnen des Unterkiefers und dem markierten Soll-Approximalpunkt für die beiden mittleren Schneidezähne am Unterkiefermodell sowie bei Position der Markierungen 13 und 14 der Schablone in der Raphemedianebene des Unterkiefermodells wird dann die Soll-Position der Approximalpunkte der übrigen Zähne des Unterkiefers bei einer Idealbezahnung durch die Markierungspunkte 2ru bis 6ru und 2lu bis 6lu festgelegt, ferner die Soll-Position der Höckerspitzen 10r, 11r und 10l und 11l der 1. Molaren des Unterkiefers.

D. h. es ist mit der erfindungsgemäßen Vorrichtung möglich, genau zu bestimmen, welche Zähne in welche Richtung und in welchem Umfang, bezogen auf die Projektion in der Horizontalebene, bei der Zahnregulierung bewegt werden müssen.

Um eine langfristige stabile und funktionsfähige Okklusion und Kaufunktion zu gewährleisten, ist die Okklusion in terminaler Scharnierachsenposition in Zahn- zu Zwei-Zahn-Beziehung in Neutralokklusion anzustreben. Bei vorgegebener Idealokklusion des Unterkiefers unter Berücksichtigung der individuellen Situation ergibt sich damit die korrekte Oberkieferidealokklusion und die korrekte räumliche Lagebeziehung der Oberkieferzähne eindeutig bei zentrischer Zuordnung des Unterkiefers zum Oberkiefer (terminale Scharnierachsenposition bzw. Centric Relation). Die Festlegung der Soll-Position der Oberkieferzähne bei zentraler Relation kann folgendermaßen gefunden werden:

Die mit Hilfe der zuvor beschriebenen Methode festgelegten Soll-Approximalkontakte der Unterkieferzähne in ihrer Projektion in der Horizontalebene können durch Projektion in die Medianebene auf dem Unterkiefermodell markiert werden. Insbesondere läßt sich der Approximalpunkt zwischen dem unteren 2. Prämolaren und dem 1. Molaren beiderseits bestimmen. Auf einem in terminaler Scharnierachsenposition im Artikulator montierten Oberkiefermodell oder hilfsweise in einem durch zentrisches Wachsregistrat zum Unterkiefer zugeordneten Oberkiefermodell läßt sich durch den auf dem Unterkiefermodell angezeichneten sagittalen Approximalpunkt des unteren 1. Molaren die sagittale Soll-Lage des Approximalkontaktes zwischen dem oberen 2. Prämolaren und dem 1. Molaren in sogenannter Neutralokklusion oder Neutralverzahnung durch Projektion in der Medianebene am Modell beiderseits einzeichnen.

Analog läßt sich die Soll-Lage des Approximalkontaktes zwischen dem 1. Molaren und dem benachbarten Prämolaren bei Extraktionsfällen einzeichnen (z. B. 1-PB-Distal-Relation bei Extraktion von zwei oberen Prämolaren). Überhaupt ist die erfindungsgemäße Vorrichtung selbstverständlich auch nach Durchführung einer Extraktionstherapie anwendbar.

Bei zentraler Relation eines in Idealokklusion stehenden oder eingezeichneten Unterkieferzahnes wird damit die optimale Stellung der betreffenden Oberkiefer-Antagonisten definiert.

Die betreffenden Markierungen der Zahnbogenreihe OK der Schablone für die Approximalkontakte dieser Zähne des Oberkiefers und die Markierungen 13 und 14 für die Raphemedianebene werden dann in Übereinstimmung mit den Approximalkontakte dieser in Idealokklusion befindlichen Zähne bzw. mit der Gaumennaht des Oberkiefers gebracht. So ergibt sich vorzugsweise durch Überlagerung der Schablonenpunkte 6ro und 6lo in der neuen therapeutischen sagittalen Soll-Lage durch Ablesen die ideale Anordnung der Oberkieferzähne.

Damit werden die Soll-Approximalpunkte aller übrigen Zähne des Oberkiefers durch die (weiteren) Markierungspunkte 1o, 2ro bis 5ro, 2lo bis 5lo der Schablone festgelegt. Es kann slso nun festgestellt werden, welche Zähne des Oberkiefers in welche Richtung und in welchem Umfang bei der Zahnregulierung bewegt werden müssen, damit eine ideale Schlußbißstellung zustande kommt.

Bei der Bezeichnung Approximalkontakt handelt es sich nicht in jedem Fall um den tatsächlichen Berührungspunkt, sondern wegen der anatomischen Varianz um einen Punkt, der dem bukkal gelegenen Berührungspunkt zweier Zähne sehr nahe liegt. Jedenfalls liegt der Approximalkontakt auf der Interdentalspaltlinie zwischen zwei benachbarten Zähnen in unmittelbarer Nähe der bukkalsten Berührungsstelle dieser Zähne. Die gedachten Interdentalspaltlinien schneiden die individuelle Bogenform bei korrekter Anordnung der Zähne jeweils in einem Winkel von ca. 90°.

Die Schablonen der erfindungsgemäßen Vorrichtung können auch durch entsprechende Markierungen auf einer Platte oder einem Film gebildet sein, mit der bzw. dem die Markierungen dann auf das Unterkiefer- bzw. Oberkiefermodell projiziert werden können. Die Schablonen können beispielsweise mit entsprechenden Bohrungen versehen sein oder insgesamt skelettiert ausgeführt sein, um die therapeutischen Soll-Punkte zu markieren und/oder um eine räumlich korrekte Fixierung der Schablone zum Modell sicherzustellen.

Ferner können die Markierungen der Schablone nicht nur durch Soll-Approximalpunkte gebildet sein, die in die Horizontalebene projiziert sind, vielmehr ist auch eine Projektion in die Median- oder Sagittalebene möglich. Bei einer Projektion in die Sagittalebene sind nämlich die Soll-Approximalstellen gleichfalls in Form eines Bogens angeordnet. Weiterhin sind andere anatomischmorphologisch relevante Bezugspunkte oder Linien oder Hilfslinien für den Einsatz von Behandlungsmitteln als Markierungen möglich, da z. B. für den Laborbereich andere Hilfsmittel zweckmäßig erscheinen können.

Die erfindungsgemäße Vorrichtung eignet sich zur Festlegung der Sollposition der Zähne bei bekannter Bogenform und Zahnbreiten und erlaubt die korrekte Plazierung von kieferorthopädischen Behandlungselementen bei allen Behandlungsapparaturen bei der Planung und beim Einbau bzw. Anbringen in zahntechnischen Bereich sowie ein frühzeitiges Erkennen von notwendigen Extraktionen, Zahnbogenlängen-Defiziten und Zahnbogendiskrepanzen und eine laufende Überprüfung des Behandlungserfolges. Weiterhin wird eine quantitative Erfassung durchzuführender und durchgeführter Zahnbewegungen erstmals ermöglicht. Die erfindungsgemäße Vorrichtung kann daher auch verwaltungs-und versicherungstechnische Anwendung finden.

Mit Hilfe der Schablonen kann aus den Sortimenten vorkonfektionierter Behandlungsgeräte oder Behandlungsteile der fallspezifische optimale Typ jeweils ausgewählt werden.

## Patentansprüche

1. Vorrichtung zur Bestimmung der Soll-Position aller Unter- und Oberkieferzähne, bestehend aus einem Satz von Schablonen (A, B, C, D...), wobei jede Schablone (A, B, C, D...) mit einer Markierung (13, 14) für die Raphemedianebene, einer Markierung (lu, lo) für den Approximalpunkt der mittleren Schneidezähne in der Raphemedianebene und weiteren Markierungen (2 ru bis 6 ru, 2 lu bis 6 lu, 2 to bis 6 ro, 2 lo bis 6 lo, 10 r, 11 r, 10 l, 11 l, 12 r, 12 l) für alle übrigen Zähne versehen sind und die weiteren Markierungen jeder Schablone (A, B, C, D...) des Satzes nach einer anderen Zahnbogenlänge und/oder einer anderen Zahnbogenform derart angeordnet sind, daß die Lage der okkludierenden Teile der Zähne der maximalen Interkuspidation in terminaler Scharnierachsenposition entspricht.

2. Vorrichtung nach Anspruch 1, dadurch gekennzeichnet, daß die Schablonen (A, B, C, D...) eben ausgebildet sind und die Markierungen den Stellungen der Zähne in Projektion auf die Horizontalebene entsprechen.

3. Vorrichtung nach einem der Ansprüche 1 oder 2, dadurch gekennzeichnet, daß jede Schablone (A, B, C, D...) zusätzliche Markierungen (10r, 11r, 10l, 11l) für Höckerspitzen oder Fissuren der Zähne aufweist.

4. Vorrichtung nach einem der Ansprüche 1 bis 3, dadurch gekennzeichnet, daß jede Schablone (A, B, C, D...) zusätzliche Markierungen (12r, 12l) für die Zentralpunkte der Zähne aufweist.

5. Vorrichtung nach einem der vorstehenden Ansprüche, dadurch gekennzeichnet, daß die Schablonen (A; B; C, D,...) des Satzes im wesentlichen alle im Milchgebiß vorkommenden Kiefer- und Zahnbogenformen sowie Kiefer- und Zahnbogengrößen abdecken.

6. Vorrichtung nach einem der Ansprüche 1 bis 4, dadurch gekennzeichnet, daß die Schablonen (A, B, C, D...) des Satzes im wesentlichen alle im Wechselgebiß vorkommenden Kiefer- und Zahnbogenformen sowie Kiefer- und Zahnbogengrößen abdecken.

7. Vorrichtung nach einem der vorstehenden Ansprüche, dadurch gekennzeichnet, daß ein Satz von Schablonen (A, B, C, D...) für die Stellung der Zähne in der Sollposition in der Sagittalebene und ein Satz von Schablonen für die Stellung der Zähne in der Sollposition in der Transversalebene vorgesehen ist.

## Claims

1. An apparatus for determining the ideal position of all lower and upper jaw teeth, comprising a set of templets (A, B, C, D...), each templet (A, B, C, D...) being provided with a marking (13, 14) for the raphe median plane, a marking (lu, lo) for the approximal point of the middle incisors on the raphe median plane and further markings (2 ru to 6 ru, 2 lu to 6 lu, 2 ro to 6 ro, 2 lo to 6 lo, 10 r, 11 r, 10 l, 11 l, 12 r, 12 l) for all other teeth, and the further markings of each templet (A, B, C, D...) of the set being disposed according to a different dental arch length and/or a different dental arch form in such a way that the positions of the occludent parts of the teeth correspond to maximum intercuspidation in centric relation.

2. An apparatus according to claim 1, characterized in that the templets (A, B, C, D...) have a flat design and the markings correspond to the positions of the teeth in projection onto the horizontal plane.

3. An apparatus according to either of claims 1 and 2, characterized in that each templet (A, B, C, D...) has additional markings (10 r, 11 r, 10 l, 11 l) for cusp tips or fissures in the teeth.

4. An apparatus according to any of claims 1 to 3, characterized in that each templet (A, B, C, D...) has additional markings (12 r, 12 l) for the central points of the teeth.

5. An apparatus according to any of the above claims, characterized in that the templets (A, B, C, D...) of the set cover substantially all jaw and dental arch forms and jaw and dental arch sizes occurring in primary dentition.

6. An apparatus according to any of claims 1 to 4, characterized in that the templets (A, B, C, D...) of the set cover substantially all jaw and dental arch forms and jaw and dental arch sizes occurring in mixed dentition.

7. An apparatus according to any of the above claims, characterized in that a set of templets (A, B, C, D...) is provided for the position of the teeth in the ideal position on the sagittal plane and a set of templets for the position of the teeth in the ideal position on the transversal plane.

## Revendications

1. Dispositif pour déterminer la position souhaitée de toutes les dents de la mâchoire inférieure et de la mâchoire supérieure, constitué d'un jeu de gabarits (A, B, C, D...), chaque gabarit (A, B, C, D...) étant muni d'un repère (13, 14) pour le plan médian de Raphe, d'un repère (lu, lo) pour le point approximatif des incisives médianes dans le plan médian de Raphe, et d'autres repères (2ru à 6ru, 2lu à 6lu, 2ro à 6ro, 2 lo à 6 lo, 10r, 11r, 10l, 11 l, 12r, 12l) pour toutes les autres dents, et les autres repères de chaque gabarit (A, B, C, D...) du jeu selon une autre longueur et/ou une autre forme de l'arcade dentaire, ce de telle sorte que la position des parties occlusives des dents correspond à l'intercuspidation maximale en position terminale de l'axe de charnière.

2. Dispositif selon la revendication 1, caractérisé en ce que les gabarits (A, B, C, D...) présentent une configuration plane, et les repères correspondent aux positions des dents en projection sur le plan horizontal.

3. Dispositif selon la revendication 1 ou 2, caractérisé en ce que chaque gabarit (A, B, C, D...) présente des repères supplémentaires (10r, 11r, 10l, 11l) pour des sommets de bosses ou des fissures des dents.

4. Dispositif selon une des revendications 1 a 3, caractérisé en ce que chaque gabarit (A, B, C, D...) présente des repères supplémentaires (12r, 12l) pour les points centraux des dents.

5. Dispositif selon une des revendications précédentes. caractérisé en ce que les gabarits (A, B, C, D...) du jeu couvrent pratiquement toutes les formes et tailles d'arcades dentaires et maxillaires de courbures de dents et de mâchoires et rencontrées pour les dents de lait.

6. Dispositif selon une des revendications 1 à 4, caractérisé en ce que les gabarits (A, B, C, D ...) du jeu couvrent pratiquement toutes les formes et tailles d'arcades dentaires et maxillaires rencontrées pour la seconde dentition.

7. Dispositif selon une des revendications précédentes, caractérisé en ce qu'il est prévu un jeu de gabarits (A, B, C, D...) pour la position des dents en position souhaitée dans le plan sagittal et un jeu de gabarits pour la position des dents en position souhaitée dans le plan transversal.